(19)

Europäisches
Patentamt
European
Patent Office
Office européen
des brevets

(11) **EP 1 359 769 B1**

(12) **EUROPEAN PATENT SPECIFICATION**

(45) Date of publication and mention
of the grant of the patent:
**10.10.2007 Bulletin 2007/41**

(51) Int Cl.:
***H04N 7/46*** (2006.01)

(21) Application number: **03000442.8**

(22) Date of filing: **10.01.2003**

(54) **Block prediction method using the direct mode**

Methode zur Blockprädiktion unter Verwendung des Direkt-Modus

Méthode pour la prédiction de blocks avec du mode direct

(84) Designated Contracting States:
**FI FR IT SE**

(30) Priority: **09.04.2002 KR 2002019262**
**21.11.2002 KR 2002072862**

(43) Date of publication of application:
**05.11.2003 Bulletin 2003/45**

(60) Divisional application:
**05015780.9 / 1 601 209**
**06006733.7 / 1 679 904**

(73) Proprietor: **LG ELECTRONICS INC.**
**Seoul 150-010 (KR)**

(72) Inventor: **Jeon, Byeong Moon**
**Gwangjin-ku,**
**Seoul (KR)**

(74) Representative: **Schorr, Frank Jürgen et al**
**Diehl & Partner,**
**Augustenstrasse 46**
**80333 München (DE)**

(56) References cited:
**EP-A- 0 863 674          WO-A-01/33864**

- **WIEGAND T: "JOINT MODEL NUMBER 1, REVISION 1(JM-IRL)" ITU STUDY GROUP 16 - VIDEO CODING EXPERTS GROUP, XX, XX, 3 December 2001 (2001-12-03), pages 1,3-75, XP001086627**
- **TSUHAN CHEN ET AL: "A new frame interpolation scheme for talking head sequences" PROCEEDINGS OF THE INTERNATIONAL CONFERENCE ON IMAGE PROCESSING. (ICIP). WASHINGTON, OCT. 23 - 26, 1995, LOS ALAMITOS, IEEE COMP. SOC. PRESS, US, vol. 3, 23 October 1995 (1995-10-23), pages 591-594, XP010197038 ISBN: 0-7803-3122-2**

**Description**

BACKGROUND OF THE INVENTION

1. Field of the Invention

The present invention relates to a moving picture coding system, and particularly, to a block prediction method using improved direct mode for a B picture.

2. Description of the Background Art

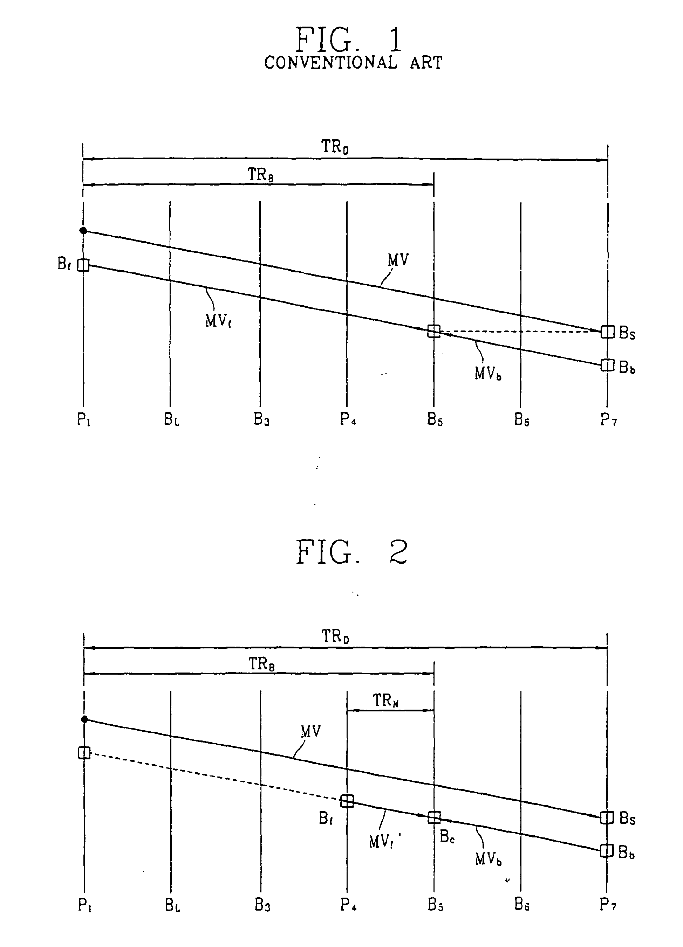

In a moving picture coding system, one of advantages for using B picture is that a direct prediction mode which does not add overhead information is selected more than any other prediction modes (a forward prediction, a backward prediction, a bidirectional prediction and intra prediction, etc.). Therefore, the moving picture coding system is able to have higher coding efficiency when using the B picture than the coding efficiency when using only P picture.
In the B picture, the block prediction method using the direct mode is to calculate forward motion vector and backward motion vector as scaled versions of a motion vector of a co-located block in a backward reference picture for direct mode, to obtain two distinct motion-compensated blocks using above motion vectors, and to obtain predicted block by averaging two motion-compensated blocks finally.
The block prediction method using the direct mode as above will be described in more detail with reference to Figure 1.
Figure 1 is a view showing a picture pattern for describing the block prediction method using the direct mode according to the conventional art. As shown therein, the picture pattern comprises an I-picture (not shown) coded using prediction only from decoded samples within the same picture, P pictures P1, P4, and P7 coded by inter prediction using at most one motion vector from previously-decoded reference pictures, and B-pictures B2, B3, B5 and B6 coded by two inter prediction blocks from previously-decoded reference pictures.
Also, parameters shown in Figure 1 will be described first for the convenience' sake. $TR_D$ represents a temporal distance between a forward reference picture for direct mode (P1) and a backward reference picture for direct mode (P7), $TR_B$ represents a temporal distance between the forward reference picture for direct mode (P1) and a current B picture (B5), MV represents a motion vector of a co-located block in the backward reference picture for direct mode (P7), $MV_f$ represents a forward motion vector of direct mode pointing to the forward reference picture for direct mode, and $MV_b$ represents a backward motion vector of direct mode pointing to the backward reference picture for direct mode. Herein, the forward reference picture for direct mode is a reference picture pointed by the motion vector of the co-located block in the backward reference picture for direct mode.
The block prediction method for direct mode will be described using above parameters as follows.
First, the forward motion vector of direct mode ($MV_f$) is obtained from a motion vector (MV) of a co-located block $B_s$ in the backward reference picture for direct mode (P7) by applying following equation (1).

$$MV_f = \frac{TR_B \times MV}{TR_D} \quad \text{------------------------------------------------} \quad (1)$$

In addition, the backward motion vector of direct mode ($MV_b$) is obtained from a motion vector (MV) of the co-located block $B_s$ in the backward reference picture for direct mode (P7) by applying following equation (2).

$$MV_b = (TR_B - TR_D) \times \frac{MV}{TR_D} \quad \text{--------------------------------} \quad (2)$$

Therefore, blocks $B_f$ and $B_b$ are motion-compensated using the motion vectors $MV_f$ and $MV_b$ calculated from equations (1) and (2), and after that, the two blocks are averaged to get a prediction value $B_c$' of a current block $B_c$ in the B picture as following equation (3).

$$B_c' = \frac{B_f + B_h}{2} \quad \text{------------------------------------------------} \quad (3)$$

However, according to the block prediction method for the direct mode of the conventional art, the forward motion vector of direct mode is obtained from the motion vector of the co-located block in the backward reference picture for direct mode, and therefore, the obtained value is just an approximated value, not a precise motion vector of the current block of the B picture.

Also, according to the block prediction method for direct mode of the conventional art, even though the reference picture temporally close to the B picture has higher similarity with the B picture, the block prediction is made using the average of two distinct motion-compensated blocks without considering temporal distance between the reference pictures. Therefore, the accuracy of predicted block is lowered.

Especially, in a sequence having a fading scene, since brightness of continuous B pictures can be gradually darkened or gradually lightened, the prediction value obtained by simply averaging two motion-compensated blocks has a lot of difference from the original value, and thereby the coding efficiency of the entire system is greatly lowered.

Further background art relating to moving picture coding may be obtained from EP 863 674 A2; WO 01/33864 A1;

Joint Video Team (JVT) of ISO/IEC MPEG and ITU-T VCEG, document JVT-A003rl, File: JVT-A003rl.doc, Generated: 2002-01-18, Pattaya, Thailand, 3-7 December 2001 and;

TSUHAN CHEN ET AL "A new frame interpolation scheme for talking head sequences".

SUMMARY OF THE INVENTION

Therefore, an object of the present invention is to provide a block prediction method using direct mode which has improved coding efficiency by obtaining a forward motion vector of direct mode from a motion vector of a co-located block in a backward reference picture for direct mode, and by obtaining predicted block of a B picture which is about to be coded presently by applying an interpolative prediction to two distinct motion-compensated blocks.

Also, another object of the present invention is to provide a block prediction method using direct mode which is able to improve accuracy of predicted block and improve a coding efficiency, by obtaining a forward motion vector of direct mode from a reference picture closest to a current B picture, and by obtaining predicted block of a B picture which is coded presently by applying an interpolative prediction to two distinct motion-compensated blocks.

To achieve the objects of the present invention, as embodied and broadly described herein, there is provided a block prediction method for improved direct mode comprising the steps of: a first step for calculating forward and backward motion vectors of direct mode for a current block in B picture; a second step for obtaining motion-compensated blocks using the forward and backward motion vectors obtained in the first step; and a third step for predicting a block of the B picture which will be coded (or decoded) presently by applying an interpolative prediction for the motion-compensated blocks obtained in the second step, in a method of predicting block of the B picture which will be coded (or decoded) presently.

The foregoing and other objects, features, aspects and advantages of the present invention will become more apparent from the following detailed description of the present invention when taken in conjunction with the accompanying drawings.

BRIEF DESCRIPTION OF THE DRAWINGS.

The accompanying drawings, which are included to provide a further understanding of the invention and are incorporated in and constitute a part of this specification, illustrate embodiments of the invention and together with the description serve to explain the principles of the invention.

In the drawings:

Figure 1 is a view showing a picture pattern for describing a block prediction method for direct mode according to the conventional art;

Figure 2 is a view showing a picture pattern for describing a block prediction method for direct mode according to the present invention;

Figure 3 is a view showing a picture pattern for describing an interpolative prediction method according to an embodiment of the present invention; and

Figure 4 is a view showing a picture pattern for describing an interpolative prediction method according to another embodiment of the present invention.

DETAILED DESCRIPTION OF THE PREFERRED EMBODIMENTS

Reference will now be made in detail to the preferred embodiments of the present invention, examples of which are illustrated in the accompanying drawings.

In a block prediction method for direct mode according to the present invention, a forward motion vector and a backward motion vector of direct mode are calculated from a motion vector of a co-located block in a backward reference picture for direct mode, two motion-compensated blocks are obtained using above motion vectors, and finally, a predicted block is obtained by interpolating two motion-compensated blocks.

Also, in the block prediction method using direct mode according to the present invention, the backward motion vector is calculated from the backward reference picture for direct mode, a forward motion vector of direct mode is calculated from the reference picture closest to the current B picture among the forward reference pictures , and motion-compensated blocks are obtained from above motion vectors, and finally, a predicted block is obtained by interpolating two motion-compensated blocks.

Hereinafter, an embodiment of the present invention will be described with reference to accompanying Figures as follows.

Figure 2 shows a picture pattern for describing the block prediction method for direct mode according to the present invention. As shown therein, the picture pattern comprises an I-picture (not shown) coded using prediction only from decoded samples within the same picture, P pictures P1, P4, and P7 coded by inter prediction using at most one motion vector from previously-decoded reference pictures, and B-pictures B2, B3, B5 and B6 coded by two inter prediction blocks from previously-decoded reference pictures.

Parameters shown in Figure 2 will be described first for the convenience' sake. $TR_D$ represents a temporal distance between a forward reference picture for direct mode (P1) and a backward reference picture for direct mode (P7), $TR_B$ represents a temporal distance between the forward reference picture for direct mode (P1) and a current B picture (B5), $TR_N$ represents a temporal distance between the reference picture (P4) closest to the current B picture and the current B picture (B5), MV represents a motion vector of a co-located block in the backward reference picture for direct mode (P7), $MV_f'$ represents a forward motion vector of direct mode pointing to the reference picture (P4) closest to the current B picture, and $MV_B$ represents a backward motion vector of direct mode pointing to the backward reference picture for direct mode (P7).

At that time, the motion vector (MV) of the co-located block $B_s$ in the backward reference picture for direct mode (P7) is obtained in the process of coding (or decoding) the backward reference picture for direct mode before the current B picture is coded (or decoded).

The block prediction method for direct mode as constructed above according to the present invention will be described as follows.

The forward motion vector ($MV_f'$), which points to the reference picture (P4) having the closest temporal distance among the forward reference pictures, is obtained from following equation (4).

$$MV_f' = \frac{TR_N \times MV}{TR_D} \quad \text{-----------------------------------------} \quad (4)$$

In addition, the backward motion vector ($MV_b$), which points to the backward reference picture for direct mode (P7), is obtained from the conventional art using following equation (2).

$$MV_b = (TR_B - TR_D) \times \frac{MV}{TR_D} \quad \text{--------------------------------} \quad (2)$$

Accordingly, motion-compensated blocks $B_f$ and $B_b$ are obtained using the motion vectors $MV_f'$ and $MV_b$ calculated by the equations (2) and (4).

On the other hand, the predicted value $B_c'$ for the block $B_c$ is obtained from the above two motion-compensated blocks $B_f$ and $B_b$. At that time, the B picture may be located closer to one between the reference picture in which the motion-compensated block $B_f$ exists and the backward reference picture for direct mode in which the motion-compensated block $B_b$ exists.

The block prediction method using direct mode according to the present invention can be applied to Figures 1 and 2, and therefore, the reference picture in which the motion-compensated block $B_f$ exists is the forward reference picture for direct mode (for example, P1 picture in Figure 1) or the reference picture closest to the B picture (for example, P4 picture in Figure 2).

Moreover, in a sequence having a fading scene, the brightness of continuous B pictures can be gradually darkened or gradually lightened, and therefore, the predicted value obtained by simply averaging the two motion-compensated blocks $B_f$ and $B_b$ as in the conventional art has a large difference from the actually original value. Therefore, the coding efficiency is lowered significantly.

Therefore, the block prediction method using direct mode according to the present invention performs the interpolative prediction considering the temporal distance between the current B picture and the reference picture in which the motion-compensated block $B_f$ exists (that is, the forward reference picture for direct mode or the reference picture closest to the B picture), and considering the temporal distance between the current B picture and the backward reference picture for direct mode, in order to improve the accuracy of the block predicted by the direct mode.

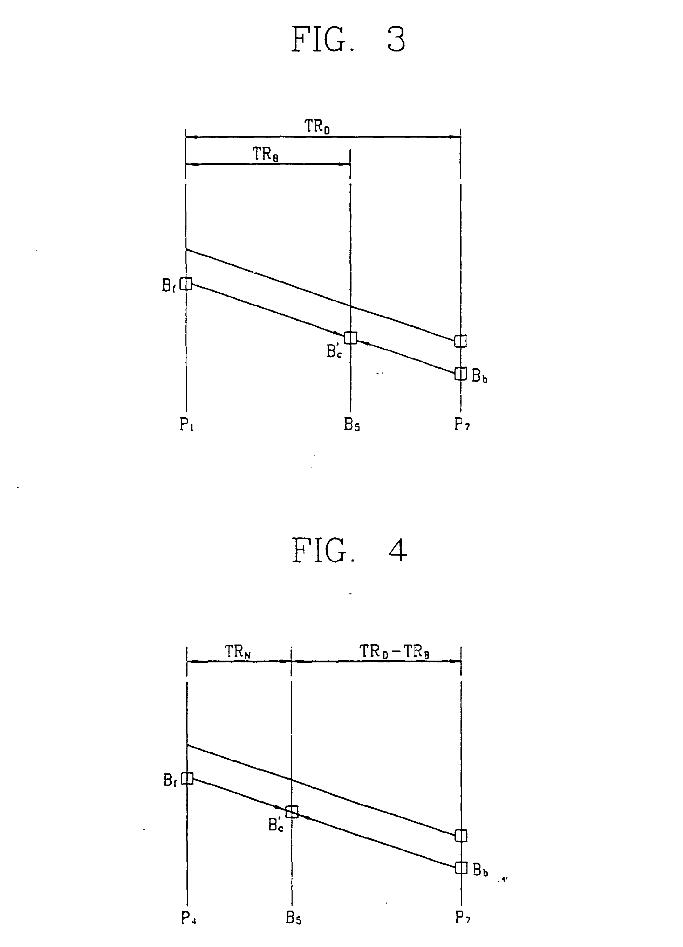

As shown in Figure 3, if the forward motion vector of direct mode is obtained using the conventional art, the motion-compensated block $B_f$ exists in the forward reference picture for direct mode (P1) and the motion-compensated block $B_b$ exists in the backward reference picture for direct mode (P7), the interpolative prediction as following equation (5) is performed. Herein, $TR_D$ is the temporal distance between the forward reference picture for direct mode (P1) and the backward reference picture for direct mode (P7), and $TR_B$ is the temporal distance between the forward reference picture for direct mode (P1) and the current B picture (B5). Especially, the interpolative prediction method includes the same averaging calculation as the conventional art for a case that the B picture is located on a center between the forward reference picture for direct mode and the backward reference picture for direct mode.

$$B_c' = B_f \times \frac{(TR_D - TR_B)}{TR_D} + B_b \times \frac{TR_B}{TR_D} \quad \text{------------------------} \quad (5)$$

Also, as shown in Figure 4, in case that the forward motion vector of direct mode is obtained according to the present invention, the motion-compensated block $B_f$ exists in the reference picture (P4) closest to the current B picture, and the motion-compensated block $B_b$ exists in the backward reference picture for direct mode (P7). Therefore, the interpolative prediction as following equation (6) is performed. Herein, $TR_D$ is the temporal distance between the forward reference picture for direct mode (P1) and the backward reference picture for direct mode (P7), and $TR_B$ is the temporal distance between the forward reference picture for direct mode (P1) and the current B picture, and $TR_N$ is the temporal distance between the reference picture (P4) closest to the current B picture and the current B picture.

$$B_C' = B_f \times \frac{(TR_D - TR_B)}{(TR_N + TR_D - TR_B)} + B_b \times \frac{TR_N}{(TR_N + TR_D - TR_B)} \quad \text{------------} \quad (6)$$

On the other hand, the respective pictures can be represented using a picture order counter, that is, display order information.

Therefore, the equations (5) and (6) can be represented as following equation (7) using the picture order count values, which are the display order information of respective pictures. Herein, $T_c$ is a picture order count value, that is, the display order information allocated to the current B picture, $T_f$ is a picture order count value, that is, the display order information allocated to the forward reference picture for direct mode or a picture order count value, that is, the display order information allocated to the reference picture closest to the B picture in case that the forward motion vector is calculated by the equation (4), and $T_b$ is a picture order count value, that is, the display order information allocated to the backward reference picture for direct mode.

$$B_c' = B_f \times \frac{(T_b - T_c)}{(T_b - T_f)} + B_b \times \frac{(T_c - T_f)}{(T_b - T_f)} \quad \text{--------------------------------} \quad (7)$$

As described above, according to the present invention, the forward motion vector of direct mode is obtained from the motion vector of the co-located block in the backward reference picture for direct mode, and a predicted block of the B picture, which is about to be coded, is obtained by applying interpolative prediction to the motion-compensated block values. Therefore, the coding efficiency is improved when comparing to that of the conventional art.

Also, according to the present invention, the forward motion vector of direct mode is obtained from the reference picture closest to the B picture which is about to be coded (or decoded) presently and having higher similarity with the B picture, and the predicted block of the B picture is obtained by applying the interpolative prediction to the blocks which are motion-compensated from above forward motion vector and backward motion vector of direct mode. Therefore, the accuracy of the predicted block can be improved and the coding efficiency can be improved.

Summarized the present invention describes a block prediction method using improved direct mode for B picture in a moving picture coding system for obtaining forward and backward motion vectors of direct mode, obtaining two distinct motion-compensated blocks using the forward and backward motion vectors, and predicting a block of the B picture which is about to be coded (or decoded) presently by an interpolative prediction to the above blocks, and thereby, accuracy of the predicted block can be improved and the coding efficiency also can be improved.

## Claims

1. A method of predicting a block ($B'_c$) in a bi-predictive picture ($B_5$) to be coded or decoded in direct mode, the method comprising:

   a first step for calculating forward ($MV_f$) and backward ($MV_b$) motion vectors for the block ($B'_c$) in the bi-predictive picture ($B_5$);
   a second step for obtaining a forward motion-compensated block ($B_f$) using the forward motion vector ($MV_f$) and a forward reference picture ($P_1$), and obtaining a backward motion-compensated block ($B_b$) using the backward motion vector ($MV_b$) and a backward reference picture ($P_7$); and
   a third step for predicting the block ($B'_c$) in the bi-predictive picture ($B_5$);

   **characterised in that**
   the forward motion vector ($MV_f$) and backward motion vector ($MV_b$) for the block ($B'_c$) in the bi-predictive picture ($B_5$) are calculated from a motion vector ($MV$) of a co-located block ($B_s$) in a backward reference picture ($P_7$), based on first ($TR_B$) and second ($TR_D$) temporal distances; and
   the block ($B'_c$) in the bi-predictive picture ($B_5$) is predicted from said forward motion-compensated block ($B_f$) and said backward motion-compensated block ($B_b$), based on the first temporal distance ($TR_B$) and second temporal distance ($TR_D$),
   wherein the first temporal distance ($TR_B$) is a temporal distance between the forward reference picture ($P_1$) and the bi-predictive picture ($B_5$), and the second temporal distance ($TR_D$) is a temporal distance between the forward reference picture ($P_1$) and backward reference picture (P7).

2. The method of claim 1,
   wherein the third step predicts the block ($B'_c$) of the bi-predictive picture ($B_5$) by following equation,

$$B'_c = B_f \times \frac{(TR_D - TR_B)}{TR_D} + B_b \times \frac{TR_B}{TR_D} \quad ,$$

   wherein,

   $B'_c$ is a predicted value of the block ($B_c$) of the bi-predictive picture ($B_5$),
   $B_f$ is the motion-compensated block obtained by using the forward motion vector ($MV_f$),
   $B_b$ is the motion-compensated block obtained by using the backward motion vector ($MV_b$),
   $TR_D$ is the temporal distance between the forward reference picture ($P_1$; $P_4$) and the backward reference picture ($P_7$), and
   $TR_B$ is the temporal distance between the forward reference picture ($P_1$; $P_4$) and the bi-predictive picture ($B_5$),

   wherein the forward reference picture ($P_1$; $P_4$) is a reference picture ($P_1$; $P_4$) pointed to by a motion vector ($MV$) of the co-located block ($B_s$) in the backward reference picture ($P_7$).

3. The method of claim 1,
   wherein the block ($B_c$) in the bi-predictive picture (B5) to be coded or decoded is predicted from the two distinct motion-compensated blocks ($B_f$; $B_b$) using a temporal distance ($TR_N$) between the bi-predictive picture ($B_5$) and a closest reference picture ($P_4$).

4. The method of claim 1, 2 or 3,
   wherein the forward motion vector ($MV_f$) in the first step is obtained from a forward reference picture ($P_1$; $P_4$) for the bi-predictive picture ($B_5$), in which the forward reference picture ($P_1$; $P_4$) is a reference picture ($P_1$; $P_4$) pointed to by a motion vector (MV) of a co-located block ($B_s$) in a backward reference picture ($P_7$).

5. The method of claim 4,
   wherein the forward motion vector ($MV_f$) is obtained by the following equation,

$$MV_f = \frac{TR_B x MV}{TR_D},$$

wherein

MV$_f$ is the forward motion vector pointing to the forward reference picture ($P_1$; $P_4$),
TR$_B$ is a temporal distance between the forward reference picture ($P_1$; $P_4$) and the bi-predictive picture ($B_5$),
MV is the motion vector (MV) of the co-located block ($B_s$) in the backward reference picture ($P_7$), and
TR$_D$ is a temporal distance between the forward reference picture ($P_1$; $P_4$) and the backward reference picture ($P_7$).

6. The method of one of the preceding claims,
   wherein the forward motion vector ($MV_f'$) in the first step is obtained from a reference picture ($P_4$) closest to the bi-predictive picture ($B_5$) to be coded or decoded among the forward reference pictures ($P_1$, $P_4$).

7. The method of claim 6,
   wherein the forward motion vector ($MV_f$) is obtained by following equation,

$$MV_f = \frac{TR_N x MV}{TR_D},$$

wherein

MV$_f$ is the forward motion vector pointing to the reference picture ($P_4$) closest to the bi-predictive picture ($B_5$),
TR$_N$ is a temporal distance between the reference picture ($P_4$) closest to the bi-predictive picture ($B_5$) and the bi-predictive picture ($B_5$),
MV is a motion vector (MV) of a co-located block ($B_s$) in a backward reference picture ($P_7$), and
TR$_D$ is a temporal distance between a forward reference picture ($P_4$) and the backward reference picture ($P_7$),

wherein the forward reference picture ($P_4$) is a reference picture ($P_4$) pointed to by a motion vector (MV) of a co-located block ($B_s$) in the backward reference picture ($P_7$).

8. The method of one of the preceding claims,
   wherein the backward motion vector ($MV_b$) in the first step is obtained from a backward reference picture ($P_7$) for the bi-predictive picture ($B_5$).

9. The method of one of claims 3 to 8,

wherein the block (B'$_c$) of the bi-predictive picture (B$_5$) is predicted by following equation,

$$B'_c = B_f x \frac{(TR_D - TR_B)}{(TR_N + TR_D - TR_B)} + B_b x \frac{TR_N}{(TR_N + TR_D - TR_B)} \quad ,$$

wherein,

B'$_c$ is a predicted value of the block of the bi-predictive picture (B$_5$),
B$_f$ is the motion-compensated block obtained by using the forward motion vector (MV$_f$) pointing to a reference picture (P$_4$) closest to the bi-predictive picture (B$_5$),
B$_b$ is the motion-compensated block obtained by using the backward motion vector (MV$_b$),
TR$_D$ is the temporal distance between a forward reference picture (P$_4$) and a backward reference picture (P$_7$),
TR$_B$ is the temporal distance between the forward reference picture (P$_4$) and the bi-predictive picture (B$_5$), and
TR$_N$ is a temporal distance between the reference picture (P$_4$) closest to the bi-predictive picture (B$_5$) and the bi-predictive picture (B$_5$),

wherein the forward reference picture (P$_4$) is a reference picture (P$_4$) pointed to by a motion vector (MV) of a co-located block (B$_s$) in the backward reference picture (P$_7$).

**Patentansprüche**

1.  Verfahren zum Vorhersagen eines Blocks (B$_c$') in einem zu codierenden oder zu decodierenden Doppel-Vorhersage-Bild (B$_5$) im Direkt-Modus, das Verfahren umfassend:

    einen ersten Schritt zum Berechnen von Vorwärts- (MV$_f$) und Rückwärts- (MV$_b$) Bewegungsvektoren für den Block (B$_c$') in dem Doppel-Vorhersage-Bild (B$_5$);
    einen zweiten Schritt zum Erhalten eines vorwärts-bewegungskompensierten Blocks (B$_f$) unter Verwendung des Vorwärts-Bewegungsvektors (MV$_f$) und eines Vorwärts-Referenzbildes (P$_1$), und zum Erhalten eines rückwärts-bewegungskompensierten Block (B$_b$) unter Verwendung des Rückwärts-Bewegungsvektors (MV$_b$) und eines Rückwärts-Referenzbildes (P$_7$); und
    einen dritten Schritt zum Vorhersagen des Blocks (B$_c$') in dem Doppel-Vorhersage-Bild (B$_5$);

    **dadurch gekennzeichnet, dass**
    der Vorwärts-Bewegungsvektor (MV$_f$) und der Rückwärts-Bewegungsvektor (MV$_b$) für den Block (B$_c$') in dem Doppel-Vorhersage-Bild (B$_5$) aus einem Bewegungsvektor (MV) eines entsprechend angeordneten Blocks (B$_S$) in einem Rückwärts-Referenzbild (P$_7$) basierend auf einem ersten (TR$_B$) und zweiten (TR$_D$) zeitlichen Abstand berechnet werden;
    der Block (B$_c$') in dem Doppel-Vorhersage-Bild (B$_5$) von dem vorwärts-bewegungskompensierten Block (B$_f$) und dem rückwärts-bewegungskompensierten Blocks (B$_b$) basierend auf dem ersten zeitlichen Abstand (TR$_B$) und dem zweiten zeitlichen Abstand (TR$_D$) vorhergesagt wird,
    wobei der erste zeitliche Abstand (TR$_B$) der zeitliche Abstand zwischen dem Vorwärts-Referenzbild (P$_1$) und dem Doppel-Vorhersage-Bild (B$_5$), und der zweite zeitliche Abstand (TR$_D$) der zeitliche Abstand zwischen dem Vorwärts-Referenzbild (P$_1$) und dem Rückwärts-Referenzbild (P$_7$) ist.

2.  Verfahren nach Anspruch 1, wobei im dritten Schritt der Block (B$_c$') des Doppel-Vorhersage-Bildes (B$_5$) durch die folgende Gleichung vorhersagt wird:

$$B'_c = B_f x \frac{(TR_D - TR_B)}{TR_D} + B_b x \frac{TR_B}{TR_D} \quad ,$$

wobei

$B_c$' ein Vorhersagewert des Blocks ($B_c$) des Doppel-Vorhersage-Bildes ($B_5$) ist,

$B_f$ der durch Verwendung des Vorwärts-Bewegungsvektors ($MV_f$) erhaltene bewegungskompensierte Block ist,

$B_b$ der durch Verwendung des Rückwärts-Bewegungsvektors ($MV_b$) erhaltene bewegungs-kompensierte Block ist,

$TR_D$ der zeitliche Abstand zwischen dem Vorwärts-Referenzbild ($P_1$; $P_4$) und dem Rückwärts-Referenzbild ($P_7$) ist, und

$TR_B$ der zeitliche Abstand zwischen dem Vorwärts-Referenzbild ($P_1$; $P_4$) und dem Doppel-Vorhersage-Bild ($B_5$) ist,

wobei das Vorwärts-Referenzbild ($P_1$; $P_4$) ein Referenzbild ist, auf welches durch einen Bewegungsvektor (MV) des entsprechend angeordneten Blocks ($B_S$) in dem Rückwärts-Referenzbild ($P_7$) gezeigt wird.

3. Verfahren nach Anspruch 1, wobei der Block ($B_c$) in dem zu codierenden oder zu decodierenden Doppel-Vorhersage-Bild ($B_5$) aus den beiden unterschiedlichen bewegungskompensierten Blöcken ($B_f$; $B_b$) unter Verwendung des zeitlichen Abstandes ($TR_N$) zwischen dem Doppel-Vorhersage-Bild ($B_5$) und einem nächstliegenden Referenzbild ($P_4$) vorhergesagt wird.

4. Verfahren nach Anspruch 1, 2 oder 3, wobei der Vorwärts-Bewegungsvektor ($MV_f$) in dem ersten Schritt aus einem Vorwärts-Referenzbild ($P_1$; $P_4$) für das Doppel-Vorhersage-Bild ($B_5$) erhalten wird, wobei das Vorwärts-Referenzbild ($P_1$; $P_4$) ein Referenzbild ist, auf welches durch einen Bewegungsvektor (MV) eines entsprechend angeordneten Blocks ($B_S$) in einem Rückwärts-Referenzbild ($P_7$) gezeigt wird.

5. Verfahren nach Anspruch 4, wobei der Vorwärts-Bewegungsvektor ($MV_f$) erhalten wird durch die folgende Gleichung:

$$MV_f = \frac{TR_B x MV}{TR_D} \quad ,$$

wobei

$MV_f$ der Vorwärts-Bewegungsvektor ist, welcher auf das Vorwärts-Referenzbild ($P_1$; $P_4$) zeigt,

$TR_B$ der zeitliche Abstand zwischen dem Vorwärts-Referenzbild ($P_1$; $P_4$) und dem Doppel-Vorhersage-Bild ($B_5$) ist,

MV der Bewegungsvektor (MV) des entsprechend angeordneten Blocks ($B_S$) in dem Rückwärts-Referenzbild ($P_7$) ist, und

$TR_D$ der zeitliche Abstand zwischen dem Vorwärts-Referenzbild ($P_1$; $P_4$) und Rückwärts-Referenzbild ($P_7$) ist.

6. Verfahren nach einem der vorangegangenen Ansprüche, wobei der Vorwärts-Bewegungsvektor ($MV_f$') in dem ersten Schritt aus einem Referenzbild ($P_4$) erhalten wird, welches unter den Vorwärts-Referenzbildern ($P_1$; $P_4$) dem zu codierenden oder zu decodierenden Doppel-Vorhersage-Bild ($B_5$) am Nächsten ist.

7. Verfahren nach Anspruch 6, wobei der Vorwärts-Bewegungsvektor ($MV_f$) erhalten wird durch die folgende Gleichung:

$$MV_f = \frac{TR_N x MV}{TR_D} \quad ,$$

wobei

$MV_f$ der Vorwärts-Bewegungsvektor ist, welcher auf das Referenzbild ($P_4$) zeigt, welches dem Doppel-Vorher-sage-Bild ($B_5$) am Nächsten ist,

$TR_N$ der zeitlicher Abstand zwischen dem Referenzbild ($P_4$), welches dem Doppel-Vorhersage-Bild ($B_5$) am Nächsten ist, und dem Doppel-Vorhersage-Bild ($B_5$) ist,

MV ein Bewegungsvektor (MV) eines entsprechend angeordneten Blocks ($B_S$) in einem Rückwärts-Referenzbild ($P_7$) ist, und

TR$_D$ der zeitliche Abstand zwischen einem Vorwärts-Referenzbild (P$_4$) und dem Rückwärts-Referenzbild (P$_7$) ist,

wobei das Vorwärts-Referenzbild (P$_4$) ein Referenzbild ist, auf welches durch einen Bewegungsvektor (MV) eines entsprechend angeordneten Blocks (B$_S$) in dem Rückwärts-Referenzbild (P$_7$) gezeigt wird.

8. Verfahren nach einem der vorangegangenen Ansprüche, wobei der Rückwärts-Bewegungsvektor (MV$_b$) in dem ersten Schritt aus einem Rückwärts-Referenzbild (P$_7$) für das Doppel-Vorhersage-Bild (B$_5$) erhalten wird.

9. Verfahren nach einem der Ansprüche 3 bis 8, wobei der Block (B$_c$') des Doppel-Vorhersage-Bilds (B$_5$) vorhergesagt wird durch die folgende Gleichung:

$$B_c' = B_f x \frac{(TR_D - TR_B)}{(TR_N + TR_D - TR_B)} + B_b x \frac{TR_N}{(TR_N + TR_D - TR_B)} \quad,$$

wobei

B$_c$' ein Vorhersagewert des Blocks in dem Doppel-Vorhersage-Bild (B$_5$) ist,
B$_f$ der durch Verwendung des Vorwärts-Bewegungsvektors (MV$_f$), welcher auf ein dem Doppel-Vorhersage-Bild (B5) am Nächsten angeordnetes Referenzbild (P$_4$) zeigt, bewegungskompensierte Block ist,
B$_b$ der durch Verwendung des Rückwärts-Bewegungsvektors (MV$_b$) bewegungskompensierte Block ist,
TR$_D$ der zeitliche Abstand zwischen einem Vorwärts-Referenzbild (P$_4$) und einem Rückwärts-Referenzbild (P$_7$) ist,
TR$_B$ der zeitliche Abstand zwischen dem Vorwärts-Referenzbild (P$_4$) und dem Doppel-Vorhersage-Bild (B5) ist, und
TR$_N$ der zeitliche Abstand zwischen dem Referenzbild (P$_4$), welches dem Doppel-Vorhersage-Bild (B$_5$) am Nächsten ist, und dem Doppel-Vorhersage-Bild (B$_5$) ist,

wobei das Vorwärts-Referenzbild (P4) ein Referenzbild ist, auf welches durch einen Bewegungsvektor (MV) eines entsprechend angeordneten Blocks (B$_S$) in dem Rückwärts-Referenzbild (P$_7$) gezeigt wird.

**Revendications**

1. Procédé de prédiction d'un bloc (B'$_c$) dans une image bi-prédictive (B$_5$) à coder ou décoder en mode direct, le procédé comprenant :

une première étape pour calculer des vecteurs de mouvement vers l'avant (MV$_f$) et vers l'arrière (MV$_b$) pour le bloc (B'$_c$) dans l'image bi-prédictive (B$_5$) ;
une seconde étape pour obtenir un bloc de mouvement compensé vers l'avant (B$_f$) en utilisant le vecteur de mouvement vers l'avant (MV$_f$) et une image de référence vers l'avant (P$_1$), et obtenir un bloc de mouvement compensé vers l'arrière (B$_b$) en utilisant le vecteur de mouvement vers l'arrière (MV$_b$) et une image de référence vers l'arrière (P$_7$) ; et
une troisième étape pour prédire le bloc (B'$_c$) dans l'image bi-prédictive (B$_5$) ;

**caractérisé en ce que**

le vecteur de mouvement vers l'avant (MV$_f$) et le vecteur de mouvement vers l'arrière (MV$_b$) pour le bloc (B'$_c$) dans l'image bi-prédictive (B$_5$) sont calculés à partir d'un vecteur de mouvement (MV) du bloc co-situé (B$_S$) dans une image de référence vers l'arrière (P$_7$), sur la base des première (TR$_B$) et seconde (TR$_D$) distances temporelles ; et
le bloc (B'$_c$) dans l'image bi-prédictive (B$_5$) est prédit à partir dudit bloc de mouvement compensé vers l'avant (B$_f$) et dudit bloc de mouvement compensé vers l'arrière (B$_D$), sur la base de la première distance temporelle (TR$_B$) et de la seconde distance temporelle (TR$_D$),
dans lequel la première distance temporelle (TR$_B$) est une distance temporelle entre l'image de référence vers l'avant (P$_1$) et l'image bi-prédictive (B$_5$), et la seconde distance temporelle (TR$_D$) est une distance temporelle entre l'image de référence vers l'avant (P$_1$) et l'image de référence vers l'arrière (P7).

2.  Procédé selon la revendication 1,
    dans lequel la troisième étape prédit le bloc (B'$_c$) de l'image bi-prédictive (B$_5$) par l'équation suivante,

$$B'_c = B_f x \frac{(TR_D - TR_B)}{TR_D} + B_b x \frac{TR_B}{TR_D} \quad ,$$

dans laquelle,

B'$_c$ est une valeur prédite du bloc (B$_c$) de l'image bi-prédictive (B$_5$),
B$_f$ est le bloc de mouvement compensé obtenu en utilisant le vecteur de mouvement vers l'avant (MV$_f$),
B$_b$ est le bloc de mouvement compensé obtenu en utilisant le vecteur de mouvement vers l'arrière (MV$_b$),
TR$_D$ est la distance temporelle entre l'image de référence vers l'avant (P$_1$ ; P$_4$) et l'image de référence vers l'arrière (P$_7$), et
TR$_B$ est la distance temporelle entre l'image de référence vers l'avant (P$_1$ ; P$_4$) et l'image bi-prédictive (B$_5$) ;

dans lequel l'image de référence (P$_1$ ; P$_4$) est une image de référence (P$_1$ ; P$_4$) pointée par un vecteur de mouvement (MV) du bloc co-situé (B$_s$) dans l'image de référence vers l'arrière (P$_7$).

3.  Procédé selon la revendication 1,
    dans lequel le bloc (B$_c$) dans l'image bi-prédictive (B5) à coder ou décoder est prédite à partir de deux blocs de mouvement compensé distincts (B$_f$ ; B$_b$) en utilisant une distance temporelle (TR$_N$) entre l'image bi-prédictive (B$_5$) et une image de référence la plus proche (P$_4$).

4.  Procédé selon la revendication 1, 2 ou 3,
    dans lequel le vecteur de mouvement vers l'avant (MV$_f$) dans la première étape est obtenu à partir d'une image de référence vers l'avant (P$_1$ ; P$_4$) pour l'image bi-prédictive (B$_5$), dans lequel l'image de référence vers l'avant (P$_1$ ; P$_4$) est une image de référence (P$_1$ ; P$_4$) pointée par un vecteur de mouvement (MV) d'un bloc co-situé (B$_s$) dans une image de référence vers l'arrière (P$_7$).

5.  Procédé selon la revendication 4,
    dans lequel le vecteur de mouvement vers l'avant (MV$_f$) est obtenu par l'équation suivante,

$$MV_f = \frac{TR_B x MV}{TR_D} \quad ,$$

dans laquelle

MV$_f$ est le vecteur de mouvement vers l'avant pointant vers l'image de référence vers l'avant (P$_1$; P$_4$),
TR$_B$ est la distance temporelle entre l'image de référence vers l'avant (P$_1$ ; P$_4$) et l'image bi-prédictive (B$_5$),
MV est le vecteur de mouvement (MV) du bloc co-situé (B$_s$) dans l'image de référence vers l'arrière (P$_7$), et
TR$_D$ est une distance temporelle entre l'image de référence vers l'avant (P$_1$ ; P$_4$) et l'image de référence vers l'arrière (P$_7$).

6.  Procédé selon l'une quelconque des revendications précédentes,
    dans lequel le vecteur de mouvement vers l'avant (MV$_f$') dans la première étape est obtenu à partir d'une image de référence (P$_4$) la plus proche d'une image bi-prédictive (B$_5$) à coder ou décoder parmi les images de référence vers l'avant (P$_1$ ; P$_4$).

7.  Procédé selon la revendication 6,

dans lequel le vecteur de mouvement (MV$_f$) est obtenu par l'équation suivante,

$$MV_f = \frac{TR_N xMV}{TR_D} \quad ,$$

où

MV$_f$ est le vecteur de mouvement vers l'avant pointant l'image de référence (P$_4$) la plus proche de l'image bi-prédictive (B$_5$),
TR$_N$ est une distance temporelle entre l'image de référence (P$_4$) la plus proche de l'image bi-prédictive (B$_5$) et l'image bi-prédictive (B$_5$),
MV est un vecteur de mouvement (MV) d'un bloc co-situé (B$_s$) dans l'image de référence vers l'arrière (P$_7$), et
TR$_D$ est la distance temporelle entre une image de référence vers l'avant (P$_4$) est l'image de référence vers l'arrière (P$_7$),

dans lequel l'image de référence vers l'avant (P$_4$) est une image de référence (P$_4$) pointée par un vecteur de mouvement (MV) d'un bloc co-situé (B$_s$) dans l'image de référence vers l'arrière (P$_7$).

8. Procédé selon l'une quelconque des revendications précédentes,
dans lequel le vecteur de mouvement vers l'arrière (MV$_b$) dans la première étape est obtenu à partir d'une image de référence vers l'arrière (P$_7$) pour une image bi-prédictive (B$_5$).

9. Procédé selon l'une quelconque des revendications 3 à 8,
dans lequel le bloc (B'$_c$) de l'image bi-prédictive (B$_5$) est prédit par l'équation suivante,

$$B'_c = B_f x \frac{(TR_D - TR_B)}{(TR_N + TR_D - TR_B)} + B_b x \frac{TR_N}{(TR_N + TR_D - TR_B)} \quad ,$$

dans laquelle,

B'$_c$ est une valeur prédite du bloc de l'image prédictive (B$_5$),
B$_f$ est le bloc de mouvement compensé obtenu en utilisant le vecteur de mouvement vers l'avant (MV$_f$) pointant à une image de référence (P$_4$) la plus proche de l'image bi-prédictive (B$_5$),
B$_b$ est le bloc de mouvement compensé obtenu en utilisant le vecteur de mouvement vers l'arrière (MV$_b$),
TR$_D$ est la distance temporelle entre une image de référence vers l'avant (P$_4$) et une image de référence vers l'arrière (P$_7$),
TR$_B$ est la distance temporelle entre l'image de référence vers l'avant (P$_4$) et l'image bi-prédictive (B$_5$), et
TR$_N$ est une distance temporelle entre l'image de référence (P$_4$) la plus proche de l'image bi-prédictive (B$_5$) et de l'image bi-prédictive (B$_5$),

dans lequel l'image de référence vers l'avant (P$_4$) est une image de référence (P$_4$) pointée par un vecteur de mouvement (MV) d'un bloc co-situé (B$_s$) dans l'image de référence vers l'arrière (P$_7$).

# FIG. 1
## CONVENTIONAL ART

# FIG. 2

# FIG. 3

# FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 863674 A2

- WO 0133864 A1